(19)

Europäisches
Patentamt
European
Patent Office
Office européen
des brevets

(11) **EP 3 751 510 A1**

(12) **EUROPEAN PATENT APPLICATION**
published in accordance with Art. 153(4) EPC

(43) Date of publication:
**16.12.2020 Bulletin 2020/51**

(21) Application number: **19875761.9**

(22) Date of filing: **25.03.2019**

(51) Int Cl.:
**G06T 5/00** (2006.01)      **G06T 7/90** (2017.01)
**G06T 7/11** (2017.01)

(86) International application number:
**PCT/CN2019/079510**

(87) International publication number:
**WO 2020/082686 (30.04.2020 Gazette 2020/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2018   CN 201811254503**

(71) Applicant: **Shenzhen Skyworth-RGB Electronic
Co., Ltd.
Shenzhen, Guangdong 518057 (CN)**

(72) Inventors:
• **MA, Ruixiang**
  **Shenzhen, Guangdong 518057 (CN)**
• **CHEN, Hongbo**
  **Shenzhen, Guangdong 518057 (CN)**
• **QUAN, Xiaorong**
  **Shenzhen, Guangdong 518057 (CN)**
• **FU, Jinxue**
  **Shenzhen, Guangdong 518057 (CN)**

(74) Representative: **Osterhoff, Utz
Bockermann Ksoll
Griepenstroh Osterhoff
Patentanwälte
Bergstraße 159
44791 Bochum (DE)**

(54) **IMAGE PROCESSING METHOD AND APPARATUS, AND COMPUTER-READABLE STORAGE MEDIUM**

(57)    Disclosed are a method for processing an image, including: based on color data of an image to be processed, using an HC algorithm and calculating the first salience value of each pixel point in the image to be processed; using an RC algorithm and calculating a second salience value of each pixel point in the image to be processed; calculating a target salience value of each pixel point in the image to be processed, based on the first salience value and the second salience value; and determining a salience map of the image to be processed based on the target salience value. The disclosure also provides a device of processing an image and a computer readable storage medium. The salient map can simultaneously highlight the interior and edge of the salient image to be processed, which is more in line with the visual attention mechanism of human beings.

S100 — Based on color data of an image to be processed, using an HC algorithm and calculating the first salience value of each pixel point in the image to be processed

S200 — Using an RC algorithm and calculating a second salience value of each pixel point in the image to be processed

S300 — Calculating a target salience value of each pixel point in the image to be processed, based on the first salience value and the second salience value

S400 — Determining a salience map of the image to be processed based on the target salience value

Fig. 2

**Description**

**TECHNICAL FIELD**

The disclosure relates to the field of image processing, in particular to a method and a device for processing an image, and a computer readable storage medium.

**BACKGROUND**

Image salience depends on human unique, unpredictable, scarce and amazing sense of vision, and is further induced by image features including color, gradient and edge. Experiments show that the brain is more likely to respond to the stimulation to a high-contrast areas in an images. How to effectively capture effective features from images has become a difficulty. There are two main methods to detect salient regions in images: salience calculation method based on local contrast and salience calculation method based on global contrast. The image processed based on HC algorithm can better highlight the interior of the target, but some edges of the target are not easy to make. The image processed based on RC algorithm can highlight the edge of the salient target, but the interior of the target is not uniform enough.
The above content is only used to assist in understanding the technical solution of this application, and does not mean to admit that the above content is prior art.

**SUMMARY**

The disclosure is to provide a method and a device for processing an image, and a computer readable storage medium. The disclosure tries to resolve the technical problem that the existing image enhancement algorithm cannot simultaneously highlight the inside and the edge of a target.
To achieve the above purpose, the disclosure provides a method of processing an image, including the following operations:

based on color data of an image to be processed, using an HC algorithm and calculating the first salience value of each pixel point in the image to be processed;

using an RC algorithm and calculating a second salience value of each pixel point in the image to be processed;

calculating a target salience value of each pixel point in the image to be processed, based on the first salience value and the second salience value; and

determining a salience map of the image to be processed based on the target salience value.

In addition, in order to achieve the aforementioned objective, the present disclosure further provides a device of processing an image. The device includes a memory, a processor and a computer program stored on the memory and executable on the processor, the computer program implements the operations of the method of processing an image described all above, when executed by the processor.
In addition, in order to achieve the above purpose, the present disclosure also provides a computer readable storage medium, a program for processing an image is stored on the computer-readable storage medium, and when executed by a processor, the program implements the operations of method of processing an image described all above.
The disclosure calculates a first salience value of each pixel in the image to be processed by using HC algorithm based on color data of the image to be processed, and further calculates a second salience value of each pixel in the image to be processed based on RC algorithm. A target salience value is obtained based on the first and the second salience value. The salience map of the image to be processed is determined based on the target salience value, so that the salience map can both highlight the interior and edge of the image to be processed, making the image more in line with human visual attention mechanism.

**BRIEF DESCRIPTION OF THE DRAWINGS**

Fig. 1 is a system schematic diagram of the hardware operating environment structure of device of processing an image according to some embodiments of the present disclosure;

Fig. 2 is a flow chart of the method of processing an image according to the first embodiment of the present disclosure.

The implementation, functional characteristics and advantages of the present application will be further described with reference to the attached drawings in combination with embodiments.

## DETAILED DESCRIPTION OF THE EMBODIMENTS

It should be understood that the specific embodiments described herein are only for illustrative purpose and are not intended to limit the present application.

The main solution to the embodiments of the present application is as follows:
The disclosure calculates a first salience value of each pixel in the image to be processed by using HC algorithm based on color data of the image to be processed, and further calculates a second salience value of each pixel in the image to be processed based on RC algorithm. A target salience value is obtained based on the first and the second salience value. The salience map of the image to be processed is determined based on the target salience value.

The related image enhancement algorithms can't highlight both the inside and the edge of a target.

This disclosure provides a solution by combining the two algorithms, to obtain a salience map which can better highlight both of the interior and the edge of the salient target, which is more in line with human visual attention mechanism.

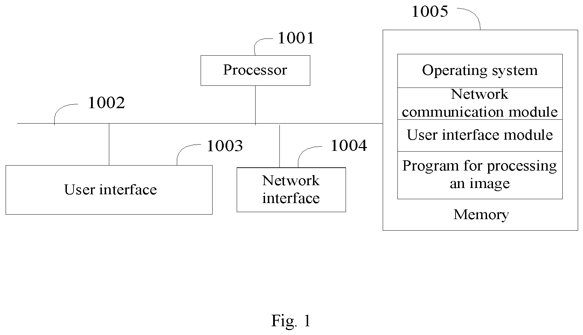

As shown in Fig. 1, Fig. 1 is a system schematic diagram of the hardware operating environment structure of device of processing an image according to some embodiments of the present disclosure.

The device involved in the embodiment of the present disclosure can be a PC, a smart phone, a tablet computer, an electronic-reader, an MP3 (Moving Picture Experts Group Audio Layer III), an MP4 (moving picture experts group audio layer iv) or a portable computer.

As shown in Fig. 1, the device may include a processor 1001, such as a CPU, a network interface 1004, a user interface 1003, a memory 1005, and a communication bus 1002. The communication bus 1002 is configured to implement connection and communication between these components. The user interface 1003 may include a Display and an input unit such as a Keyboard, and the optional user interface 1003 may also include a standard wired interface and a wireless interface. The network interface 1004 may optionally include a standard wired interface and a wireless interface (such as a WI-FI interface). The memory 1005 may be a high speed RAM memory or a non-volatile memory such as a disk memory. The memory 1005 may alternatively be a storage device independent of the aforementioned processor 1001.

In some embodiment, the controller may further include a camera, a radio frequency circuit, a sensor, an audio circuit, a Wi-Fi module, and the like. Sensors can be light sensors, motion sensors and other sensors. Of course, the device can also be configured with other sensors such as gyroscopes, barometers, hygrometers, thermometers, infrared sensors, etc., which will not be described in detail herein.

It would be understood by those skilled in the art that the structure shown in Fig. 1 does not constitute a limitation to the device, which may include more or fewer components than shown, or some components of which may be combined, or different components are arranged.

As shown in FIG. 1, the memory 1005, which is a computer storage medium, may include an operating system, a network communication module, a user interface module, and a program for processing an image.

In the device shown in FIG. 1, the network interface 1004 is mainly configured to connect with a back-end server and perform data communication with the back-end server. The user interface 1003 is mainly configured to connect the client (user end) and perform data communication with the client end; while the processor 1001 can be configured to call the computer readable program stored in the memory 1005 and execute the following operations:

based on color data of an image to be processed, using an HC algorithm and calculating the first salience value of each pixel point in the image to be processed;

using an RC algorithm and calculating a second salience value of each pixel point in the image to be processed;

calculating a target salience value of each pixel point in the image to be processed, based on the first salience value and the second salience value; and

determining a salience map of the image to be processed based on the target salience value.

Further, the processor 1001 may call the program for processing an image stored in the memory 1005, and also execute the following operations:

sequentially traversing pixel points of the image to be processed, wherein the traversed pixel points are first pixel points, and obtaining a first color distance between a currently traversed first pixel point and each of other pixel points based on a Lab color model; and

determining a first salience value of the first pixel points based on the first color distance corresponding to each first pixel point.

Further, the processor 1001 may call the program for processing an image stored in the memory 1005, and also execute the following operations:

determining whether exist second pixel points having a same color in the image to be processed; and

in response that the second pixel points fails to exist, sequentially traversing the pixels of the image to be processed in sequence, and obtaining the first color distance between the currently traversed first pixel point and each of the other pixels based on the Lab color model.

Further, the processor 1001 may call the program for processing an image stored in the memory 1005, and also execute the following operations:

in response that the second pixel points exist in the image to be processed, acquiring a second color distance between a target pixel point in the second pixel points and each of third pixel points based on a Lab color model, wherein the third pixel points are alternative pixel points rather than the second pixel points in the image to be processed;

determining a salience value of the target pixel point based on the second color distance, and taking the salience value of the target pixel point as a salience value of each of the second pixel points; and

sequentially traversing the third pixel points, and based on the Lab color model obtaining a third color distance between a currently traversed third pixel point and each of fourth pixel points, a fourth color distance between the currently traversed third pixel point and the target pixel point, and a number of pixels in the second pixel points, wherein the fourth pixel points are alternative pixel points rather than the currently traversed third pixel point in the third pixel points;

determining a salience value of each of the third pixel points, based on the third color distance, the fourth color distance and the number of pixels in the second pixel points; and

determining the first salience value based on the salience value of the second pixel points and the salience value of the third pixel points.

Further, the processor 1001 may call the program for processing an image stored in the memory 1005, and also execute the following operations:

using an SLIC algorithm and segmenting the image to be processed, and obtaining a plurality of sub-regions, wherein each of the sub-regions comprises one pixel point;
calculating a salience value of the sub-region based on the RC algorithm, and determining the second salience value based on the salience value of the sub-region.

Further, the processor 1001 may call the program for processing an image stored in the memory 1005, and also execute the following operations:

sequentially traversing each of the sub-regions and obtaining a spatial distance between a currently traversed first sub-region and each of second sub-regions, wherein the second sub-regions are alternative sub-regions rather than the first sub-region in the sub-regions; and

determining a salience value of the first sub-region based on the obtained spatial distance, and determining the second salience value based on the salience value of the first sub-region.

Further, the processor 1001 may call the program for processing an image stored in the memory 1005, and also execute the following operations:

acquiring a spatial weight value of the first sub-region; and

determining a salience value of the first sub-region based on the spatial distance and the spatial weight value.

Further, the processor 1001 may call the program for processing an image stored in the memory 1005, and also execute the following operations:

acquiring a first weight value of the first salience value and a second weight value of the second salience value; and

calculating the target salience value based on the first salience value, the first weight value, the second salience value and the second weight value,

wherein a sum of the first weight and the second weight is 1, and the first weight is no less than 0.35 and no more than 0.45.

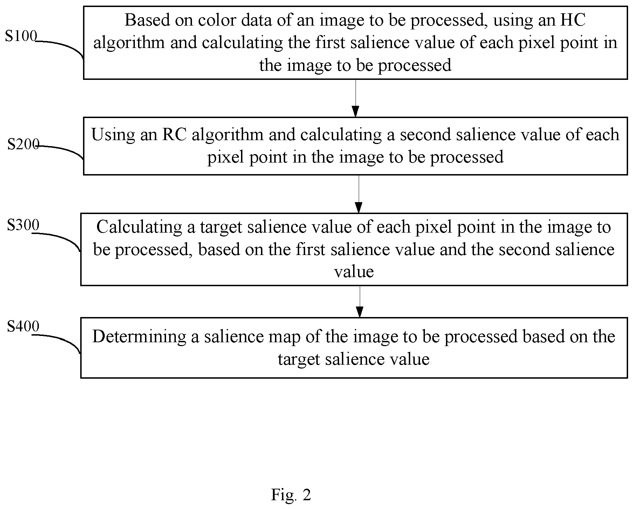

Referring to Fig. 2, the disclosure also provides a method, which includes the following operations:
operation S100, based on color data of an image to be processed, using an HC algorithm and calculating the first salience value of each pixel point in the image to be processed;
In this embodiment, the color data of the image to be processed includes Lab data of each pixel of the image to be processed in a Lab-based color model. Based on the lab data, the color distance between each pixel of the image to be processed in L*a*b space is determined, and based on the color distance, the HC algorithm is used to calculate the first salience value of each pixel in the image to be processed.
Specifically, the salience value of pixel points is calculated by the following formula:

$$S(I_k) = \sum_{\forall I_i \in I} D(I_k, I_i)$$

;

In which, $I_k$ represents the pixel to be calculated, $S(I_k)$ is the first salience value of this pixel $I_k$, $I_i$ represents other pixels, and $D(I_k, I_i)$ is the color distance between pixels $I_k$ and $I_i$ in the space L*a*b a*b.
Operation S200, using an RC algorithm and calculating a second salience value of each pixel point in the image to be processed.
In this embodiment, firstly, the SLIC algorithm is used to divide the image to be processed into several sub-regions, and each of the sub-regions includes a pixel point. Based on the RC algorithm, the spatial distance between each of the sub-regions is determined, and the second salience value of each of the sub-regions is calculated according to the spatial distance.
For example, for an area $r_k$, the formula of its second salience value is calculated as follows:

$$S(r_k) = \sum_{r_k \neq r_i} w(r_i) D_r(r_k, r_i)$$

;

in which $w(r_i)$ is the weight of area $r_i$, that is, the number of pixels in area $r_i$, and $D_r(r_k, r_i)$ is the spatial distance between area $r_k$ and area $r_i$.
Operation S300, calculating a target salience value of each pixel point in the image to be processed, based on the first salience value and the second salience value; and
In this embodiment, the first salience value obtained by HC algorithm is $S(I_k)$, and the second salience value obtained by RC algorithm is $S(r_k)$. When $S(I_k)$ and $S(r_k)$ are obtained, the target salience value of each pixel in the image to be processed is calculated based on $S(I_k)$ and $S(r_k)$.
For example, the first salience value and the second salience value are assigned weights with a sum of 1, and the target salience value $S$ is obtained by adding them, and the calculation formula is as follows:

$$S = \beta S(I_k) + (1 - \beta) S(r_k)$$

In which, β is the proportional control factor, and β ranges from 0.35 to 0.45.

Further, in this embodiment, two salience values are assigned a weight with a sum of 1, and the final salience value is obtained by summing the two weighted values. This formula is proposed based on the above algorithm, and the protection scope is not limited to this formula. All calculation methods based on the above algorithm should be within the protection scope.

Operation S400, determining a salience map of the image to be processed based on the target salience value.

In this embodiment, after obtaining the target salience value, the salience map corresponding to the image to be processed is determined based on the target salience value.

The salience map based on HC algorithm is effective with a high resolution and no excessive loss of details. When the color difference between the salient target and the background is large, it can detect the salient target better with this algorithm, while the salience map based on RC algorithm can clearly highlight the target and dim the background after considering the spatial relationship. Therefore, the salience map of this embodiment can better highlight both the interior and the edge of the image, thus simultaneously highlighting the interior and edge of the image to be processed.

The disclosure calculates a first salience value of each pixel in the image to be processed by using HC algorithm based on color data of the image to be processed, and further calculates a second salience value of each pixel in the image to be processed based on RC algorithm. A target salience value is obtained based on the first and the second salience value. The salience map of the image to be processed is determined based on the target salience value, so that the salience map can both highlight the interior and edge of the image to be processed, making the image more in line with human visual attention mechanism.

Based on the first embodiment, a second embodiment of the method of the present disclosure is proposed. In this embodiment, operation S100 includes:

operation S110, sequentially traversing pixel points of the image to be processed, in which the traversed pixel points are first pixel points, and obtaining a first color distance between a currently traversed first pixel point and each of other pixel points based on a Lab color model; and

operation S120, determining a first salience value of the first pixel points based on the first color distance of each first pixel point.

In this embodiment, each pixel in the image to be processed is sequentially traversed, and the currently traversed pixel is set as the first pixel point currently traversed. Based on the Lab color model, the first color distance between the currently traversed first pixel point and other pixels is obtained, and the first salience value of the currently traversed first pixel point is determined based on the obtained first color distance until all pixels in the image to be processed are traversed.

Specifically, the sum of the first color distances is the salience value of the first pixel point, and the salience value of the pixel is calculated by the following formula:

$$S(I_k) = \sum_{\forall I_i \in I} D(I_k, I_i)$$ ;

In which, $I_k$ represents the pixel to be calculated, $S(I_k)$ is the first salience value of this pixel $I_k$, $I_i$ represents other pixels, and $D(I_k, I_i)$ is the color distance between pixels $I_k$ and $I_i$ in the space L*a*b a*b.

According to the method proposed in this embodiment, the first color distance between the currently traversed first pixel point and other pixels is obtained based on the Lab color model, and then the first salience value of the first pixel point is determined based on the first color distance, so that the first salience value can be accurately determined according to the first color distance, thereby improving the accuracy of the target salience value. The subsequently obtained significance map can simultaneously highlight the interior and edge of the image to be processed.

Based on the second embodiment, a third embodiment of the method of the present disclosure is proposed. In this embodiment, operation S110 includes:

operation S111, determining whether exist second pixel points having a same color in the image to be processed;

operation S112, in response that the second pixel points fails to exist, sequentially traversing the pixels of the image to be processed in sequence, and obtaining the first color distance between the currently traversed first pixel point and other pixels based on the Lab color model.

In this embodiment, it is first determined whether there are second pixel points with the same color in the image to be processed. For example, RGB data of each pixel is calculated based on Lab data of each pixel in the lab-based color model of the image to be processed, and whether there are second pixel points with the same color is determined according to RGB data of each pixel in the image to be processed. If not, operation S110 is executed.

According to the method provided by this embodiment, it is determined whether there is a second pixel point with the same color in the image to be processed. Then, if there is no second pixel point having the same color in the image to be processed, the pixels of the image to be processed are sequentially traversed, and the first color distance is obtained between the currently traversed first pixel point and other pixels based on the Lab color model. It may accurately determine the first salience value according to the first color distance if there is no pixel with the same color in the image to be processed.

Based on the third embodiment, a fourth embodiment of the method of the present disclosure is proposed. In this embodiment, after operation S111, the method further includes:

operation S113, in response that the second pixel points exist in the image to be processed, acquiring a second color distance between a target pixel point in the second pixel points and each of third pixel points based on a Lab color model, wherein the third pixel points are alternative pixel points rather than the second pixel points in the image to be processed;

operation S114, determining a salience value of the target pixel point based on the second color distance, and taking the salience value of the target pixel point as a salience value of each of the second pixel points; and

operation S115, sequentially traversing the third pixel points, and based on the Lab color model obtaining a third color distance between a currently traversed third pixel point and each of fourth pixel points, a fourth color distance between the currently traversed third pixel point and the target pixel point, and a number of pixels in the second pixel points, wherein the fourth pixel points are alternative pixel points rather than the currently traversed third pixel point in the third pixel points;

operation S116, determining a salience value of each of the third pixel points, based on the third color distance, the fourth color distance and the number of pixels in the second pixel points; and

operation S117: determining the first salience value based on the salience value of the second pixel points and the salience value of the third pixel points.

In this embodiment, if there are second pixel points with the same color in the image to be processed, any one of the second pixel points can be taken as a target pixel point, and the second color distance between the target pixel point and the third pixel is obtained based on the Lab color model, and the salience value of the target pixel point is determined based on the second color distance. The positions of pixels with a same color overlap in Lab color model, and therefore the salience value of the target pixel point is the salience value of the second pixel points.

The formula for calculating the salience value of the third pixel is as follows:

$$S(I_k) = S(c_l) = \sum_{j=1}^{n} f_j D(c_l, c_j)$$

in which $c_l$ is the color value in pixel $I_k$, n is the number of pixels with different colors, and $f_j$ is the number of pixels $c_j$ with the same color in image I.

According to the method provided by this embodiment, when second pixel points with the same color exist in the image to be processed, a second color distance between a target pixel point in the second pixel points and each of the third pixels is obtained based on the Lab color model. And then the salience value of the target pixel point is determined based on the second color distance. The third pixel points are sequentially traversed, obtaining a third color distance between the currently traversed third pixel point and a fourth pixel point, a fourth color distance between the currently traversed third pixel point and the target pixel point and the number of pixels of the second pixel points based on the Lab color model. It further determines the salience value of each of the third pixel points based on the third color distance, the fourth color distance and the number of pixels. Finally, the first salience value is determined based on the salience value of the second pixel point and the salience value of the third pixel. The calculation process of the first salience value can be simplified and the calculation efficiency of the first salience value can be improved when there are pixels with the same color in the image to be processed.

Based on the first embodiment, a fifth embodiment of the method of the present disclosure is proposed. In this embodiment, operation S200 includes:

operation S210, using an SLIC algorithm and segmenting the image to be processed, and obtaining a plurality of sub-regions, wherein each of the sub-regions comprises one pixel point;

operation S220, calculating a salience value of the sub-region based on the RC algorithm, and determining the second salience value based on the salience value of the sub-region.

In this embodiment, firstly, the SLIC algorithm is used to segment the image to obtain multiple sub-regions, and each of the sub-regions only contains one pixel.

For one region $r_k$, the calculation formula of its second salience value is as follows:

$$S(r_k) = \sum_{r_k \neq r_i} w(r_i) D_r(r_k, r_i)$$

;

in which $w(r_i)$ is the weight of area $r_i$, that is, the number of pixels in area $r_i$, and $D_r(r_k, r_i)$ is the spatial distance between area $r_k$ and area $r_i$.

According to the method proposed in this embodiment, the image to be processed is segmented by SLIC algorithm to obtain a plurality of sub-regions, and then the salience values corresponding to the sub-regions are calculated based on RC algorithm. The second salience value is determined based on the salience values corresponding to the sub-regions, so that the second salience value can be accurately determined according to the sub-regions, thereby improving the accuracy and efficiency of the second salience value.

Based on the fifth embodiment, a sixth embodiment of the method of the present disclosure is proposed. In this embodiment, operation S220 includes:

operation S221, sequentially traversing each of the sub-regions and obtaining a spatial distance between a currently traversed first sub-region and each of the second sub-regions, wherein the second sub-regions are alternative sub-regions rather than the first sub-region in the sub-regions; and

operation S222, determining a salience value of the first sub-region based on the obtained spatial distance, and determining the second salience value based on the salience value of the first sub-region.

In this embodiment, each of the sub-regions in the image to be processed is sequentially traversed, and the currently traversed sub-region is set as the first sub-region, the spatial distance between the first sub-region and other sub-regions is obtained, and the salience value of the first sub-region is determined based on the obtained spatial distance until all sub-regions in the image to be processed are traversed.

Specifically, the sum of the first spatial distances is the salience value of the first sub-region, and the salience value of the sub-region is calculated by the following formula:

$$S(r_k) = \sum_{r_k \neq r_i} w(r_i) D_r(r_k, r_i)$$

in which $w(r_i)$ is the weight of area $r_i$, that is, the number of pixels in area $r_i$, and $D_r(r_k, r_i)$ is the spatial distance between area $r_k$ and area $r_i$.

According to the method proposed in this embodiment, the spatial distance between the currently traversed first sub-region and other sub-regions is obtained by sequentially traversing the sub-regions of the image to be processed, and then the salience value of the first sub-region is determined based on the spatial distance, so that the salience value of the first sub-region can be accurately determined according to the spatial distance, thereby improving the accuracy of the target salience value and enabling the subsequently obtained salience map to highlight the edge of the image to be processed significantly.

Based on the sixth embodiment, a seventh embodiment of the method of the present disclosure is proposed. In this embodiment, operation S222 includes:

operation S2221, obtaining the spatial weights corresponding to the first sub-region;
operation S2222, determining a salience value of the first sub-region based on the spatial distance and the spatial weight.

In this embodiment, the salience value of the first sub-region is determined based on the spatial distance between the first sub-region and other sub-regions by obtaining the spatial weight corresponding to the first sub-region.

Specifically, for one sub-region $r_k$, the significance calculation formula is as follows:

$$S(r_k) = \sum_{r_k \neq r_i} \exp(-D_r(r_k, r_i)/\sigma_s^2) w(r_i) D_r(r_k, r_i)$$

in which $D_r(r_k, r_i)$ is the spatial distance between sub-region $r_k$ and other sub-regions $r_i$, $\sigma_s$ is the spatial weight corresponding to sub-region $r_k$, and $w(r_i)$ is the pixel number of sub-region $r_i$.

According to the method proposed in this embodiment, the salience value of the first sub-region is determined based on the spatial distance between the first sub-region and other sub-regions, and the salience value of the first sub-region is determined based on the spatial weight corresponding to the sub-regions, which can increase the influence of the adjacent regions and reduce the influence of the remote regions, so that the subsequent salience map can highlight the edge of the image to be processed significantly.

Based on the first embodiment, an eighth embodiment of the method of the present disclosure is proposed. In this embodiment, operation S100 includes:

operation S310, acquiring a first weight value of the first salience value and a second weight value of the second salience value; and

operation S320, calculating the target salience value based on the first salience value, the first weight value, the second salience value and the second weight value,

wherein a sum of the first weight and the second weight is 1, and the first weight is no less than 0.35 and no more than 0.45.

In this embodiment, the first weight corresponding to the first salience value and the second weight corresponding to the second salience value are first obtained, and then the target salience value is calculated based on the first salience value, the first weight value, the second salience value and the second weight value, where the sum of the first weight value and the second weight value is 1, and the first weight value ranges from 0.35 to 0.45.

Specifically, the formula for calculating the target salience value is as follows:

$$S = \beta S(I_k) + (1-\beta) S(r_k)$$

$S$ is the target salience value, $\beta$ is the first weight value, $S(I_k)$ is the first salience value, $S(r_k)$ is the second salience value and $(1-\beta)$ is the second weight value.

In the method proposed in this embodiment, the first weight corresponding to the first salience value and the second weight corresponding to the second salience value are obtained, and then the target salience value is calculated based on the first salience value, the first weight value, the second salience value and the second weight value. As such, the finally obtained salience map can simultaneously highlight the interior and edge of the salience image to be processed.

In addition, the embodiment of the disclosure also provides a computer readable storage medium, on which computer readable instructions are stored, and when the computer readable instructions are executed by a processor, the following operations are realized:

based on color data of an image to be processed, using an HC algorithm and calculating the first salience value of each pixel point in the image to be processed;

using an RC algorithm and calculating a second salience value of each pixel point in the image to be processed;

calculating a target salience value of each pixel point in the image to be processed, based on the first salience value and the second salience value; and

determining a salience map of the image to be processed based on the target salience value.

Further, when the computer readable instructions are executed by the processor, the following operations are also implemented:

sequentially traversing pixel points of the image to be processed, wherein the traversed pixel points are first pixel points, and obtaining a first color distance between a currently traversed first pixel point and each of other pixel points based on a Lab color model; and

determining a first salience value of the first pixel points based on the first color distance of each first pixel point.

Further, when the computer readable instructions are executed by the processor, the following operations are also implemented:

determining whether exist second pixel points having a same color in the image to be processed;

in response that the second pixel points fails to exist, sequentially traversing the pixels of the image to be processed in sequence, and obtaining the first color distance between the currently traversed first pixel point and each of other pixels based on the Lab color model.

Further, when the computer readable instructions are executed by the processor, the following operations are also implemented:

in response that the second pixel points exist in the image to be processed, acquiring a second color distance between a target pixel point in the second pixel points and each of third pixel points based on a Lab color model, wherein the third pixel points are alternative pixel points rather than the second pixel points in the image to be processed;

determining a salience value of the target pixel point based on the second color distance, and taking the salience value of the target pixel point as a salience value of each of the second pixel points; and

sequentially traversing the third pixel points, and based on the Lab color model obtaining a third color distance between a currently traversed third pixel point and each of fourth pixel points, a fourth color distance between the currently traversed third pixel point and the target pixel point, and a number of pixels in the second pixel points, wherein the fourth pixel points are alternative pixel points rather than the currently traversed third pixel point in the third pixel points;

determining a salience value of each of the third pixel points, based on the third color distance, the fourth color distance and the number of pixels in the second pixel points; and

determining the first salience value based on the salience value of the second pixel points and the salience value of the third pixel points.

Further, when the computer readable instructions are executed by the processor, the following operations are also implemented:

using an SLIC algorithm and segmenting the image to be processed, and obtaining a plurality of sub-regions, wherein each of the sub-regions comprises one pixel point;
calculating a salience value of the sub-region based on the RC algorithm, and determining the second salience value based on the salience value of the sub-region.

Further, when the computer readable instructions are executed by the processor, the following operations are also implemented:

sequentially traversing each of the sub-regions and obtaining a spatial distance between a currently traversed first sub-region and each of the second sub-regions, wherein the second sub-regions ares alternative sub-regions rather than the first sub-region in the sub-regions; and

determining a salience value of the first sub-region based on the obtained spatial distance, and determining the second salience value based on the salience value of the first sub-region.

Further, when the computer readable instructions are executed by the processor, the following operations are also implemented:

acquiring a spatial weight value of the first sub-region; and

determining a salience value of the first sub-region based on the spatial distance and the spatial weight value.

Further, when the computer readable instructions are executed by the processor, the following operations are also implemented:

acquiring a first weight value of the first salience value and a second weight value of the second salience value; and

calculating the target salience value based on the first salience value, the first weight value, the second salience value and the second weight value,

wherein a sum of the first weight and the second weight is 1, and the first weight is no less than 0.35 and no more than 0.45.

It should be noted that in this document, the terms "comprising" "including" or any other variation thereof are intended to cover a non-exclusive inclusion, such that a process, method, article, or system that includes a list of elements includes not only those elements but also other elements not expressly listed, or elements inherent to such process, method, article, or system. Without further restrictions, an element defined by the statement" includes an" does not exclude the presence of another identical element in a process, method, article, or system including the element.

The aforementioned serial numbers regarding the embodiments of the present application are for description only and do not represent the superiority and inferiority of the embodiments.

From the above description of the embodiments, those skilled in the art can clearly understand that the method of the above embodiments can be implemented by means of software plus necessary general-purpose hardware platforms. Of course, it can also be implemented by means of hardware, but in many cases the former is a better embodiment. Based on this understanding, the technical solution of the present application, in essence, or the part contributing to the prior art, can be embodied in the form of a software product stored in a storage medium (such as ROM/RAM, magnetic disk, diskette) as described above, including several instructions to cause a terminal device (which can be a mobile phone, computer, server, air conditioner, or network device, etc.) to perform the methods described in various embodiments of the present application.

The description aforementioned is only the optional embodiment of the present application and is not intended to limit the scope of the present application. Any equivalent structural or flow modification made by using the description and drawings of the present application or direct/indirect application in other related technical fields under the concept of the present application shall be included in the protection scope of the present application.

## Claims

1. A method of processing an image, wherein comprising:

   based on color data of an image to be processed, using an HC algorithm and calculating the first salience value of each pixel point in the image to be processed;
   using an RC algorithm and calculating a second salience value of each pixel point in the image to be processed;
   calculating a target salience value of each pixel point in the image to be processed, based on the first salience value and the second salience value; and
   determining a salience map of the image to be processed based on the target salience value.

2. The method according to claim 1, wherein the operation of based on color data of an image to be processed, using an HC algorithm and calculating the first salience value of each pixel point in the image to be processed, comprises:

   sequentially traversing pixel points of the image to be processed, wherein the traversed pixel points are first pixel points, and obtaining a first color distance between a currently traversed first pixel point and each of other pixel points based on a Lab color model; and
   determining a first salience value of the first pixel points based on the first color distance corresponding to each first pixel point.

3. The method according to claim 2, wherein the operation of sequentially traversing pixel points of the image to be processed, and obtaining a first color distance between a currently traversed first pixel point and other pixel points based on a Lab color model, comprises:

determining whether exist second pixel points having a same color in the image to be processed; and
in response that the second pixel points fails to exist, sequentially traversing the pixels of the image to be processed in sequence, and obtaining the first color distance between the currently traversed first pixel point and each of the other pixels based on the Lab color model.

4. The method according to claim 3, wherein after the operation of determining whether exist second pixel points having a same color in the image to be processed, the method further comprises:

in response that the second pixel points exist in the image to be processed, acquiring a second color distance between a target pixel point in the second pixel points and each of third pixel points based on a Lab color model, wherein the third pixel points are alternative pixel points rather than the second pixel points in the image to be processed;
determining a salience value of the target pixel point based on the second color distance, and taking the salience value of the target pixel point as a salience value of each of the second pixel points; and
sequentially traversing the third pixel points, and based on the Lab color model obtaining a third color distance between a currently traversed third pixel point and each of fourth pixel points, a fourth color distance between the currently traversed third pixel point and the target pixel point, and a number of pixels in the second pixel points, wherein the fourth pixel points are alternative pixel points rather than the currently traversed third pixel point in the third pixel points;
determining a salience value of each of the third pixel points, based on the third color distance, the fourth color distance and the number of pixels in the second pixel points; and
determining the first salience value based on the salience value of the second pixel points and the salience value of the third pixel points.

5. The method according to claim 1, wherein the operation of using an RC algorithm and calculating a second salience value of each pixel point in the image to be processed, comprises:

using an SLIC algorithm and segmenting the image to be processed, and obtaining a plurality of sub-regions, wherein each of the sub-regions comprises one pixel point;
calculating a salience value of each of the sub-regions based on the RC algorithm, and determining the second salience value based on the salience value of the sub-region.

6. The method according to claim 5, wherein the operation of calculating a salience value of each of the sub-regions based on the RC algorithm, and determining the second salience value based on the salience value of each of the sub-regions, comprises:

sequentially traversing each of the sub-regions and obtaining a spatial distance between a currently traversed first sub-region and each of second sub-regions, wherein the second sub-regions are alternative sub-regions rather than the first sub-region in the sub-regions; and
determining a salience value of the first sub-region based on the obtained spatial distance, and determining the second salience value based on the salience value of the first sub-region.

7. The method according to claim 6, wherein the operation of determining a salience value of the first sub-region based on the obtained spatial distance, comprises:

acquiring a spatial weight value of the first sub-region; and
determining a salience value of the first sub-region based on the spatial distance and the spatial weight value.

8. The method according to claim 1, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

9. The method according to claim 2, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

10. The method according to claim 3, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

11. The method according to claim 4, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

12. The method according to claim 5, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

13. The method according to claim 6, wherein the operation of calculating a target salience value of each pixel point in the image to be processed, based on the first salience value and the second salience value, comprises:

acquiring a first weight value of the first salience value and a second weight value of the second salience value; and
calculating the target salience value based on the first salience value, the first weight value, the second salience value and the second weight value,
wherein a sum of the first weight and the second weight is 1, and the first weight is no less than 0.35 and no more than 0.45.

14. A device of processing an image, wherein comprising a memory, a processor and a computer program stored on the memory and executable by the processor, wherein the computer program when executed by the processor implements the following operations:

based on color data of an image to be processed, using an HC algorithm and calculating the first salience value of each pixel point in the image to be processed;

using an RC algorithm and calculating a second salience value of each pixel point in the image to be processed;

calculating a target salience value of each pixel point in the image to be processed, based on the first salience value and the second salience value; and

determining a salience map of the image to be processed based on the target salience value.

15. A computer readable storage medium, wherein the computer readable storage medium stores one or more programs for processing a image, wherein the one or more programs comprises operations that, when executed by a processor, cause the computer readable storage medium to:

based on color data of an image to be processed, using an HC algorithm and calculating the first salience value of each pixel point in the image to be processed;

using an RC algorithm and calculating a second salience value of each pixel point in the image to be processed;

calculating a target salience value of each pixel point in the image to be processed, based on the first salience value and the second salience value; and

determining a salience map of the image to be processed based on the target salience value.

Fig. 1

| S100 | Based on color data of an image to be processed, using an HC algorithm and calculating the first salience value of each pixel point in the image to be processed |
|---|---|

| S200 | Using an RC algorithm and calculating a second salience value of each pixel point in the image to be processed |
|---|---|

| S300 | Calculating a target salience value of each pixel point in the image to be processed, based on the first salience value and the second salience value |
|---|---|

| S400 | Determining a salience map of the image to be processed based on the target salience value |
|---|---|

Fig. 2

## INTERNATIONAL SEARCH REPORT

| International application No. |
| --- |
| **PCT/CN2019/079510** |

**A. CLASSIFICATION OF SUBJECT MATTER**

G06T 5/00(2006.01)i; G06T 7/90(2017.01)i; G06T 7/11(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, SIPOABS, DWPI, CNKI, CNTXT: 图像, 像素, 显著性, 颜色, 距离, 区域, 权值, image, pixel, salient, region, detection, color, distance, region, lab, hc, rc

**C. DOCUMENTS CONSIDERED TO BE RELEVANT**

| Category* | Citation of document, with indication, where appropriate, of the relevant passages | Relevant to claim No. |
| --- | --- | --- |
| PX | CN 109461130 A (SHENZHEN SKYWORTH RGB ELECTRONICS CO., LTD.) 12 March 2019 (2019-03-12) entire document | 1-15 |
| Y | CN 103714537 A (WUHAN UNIVERSITY OF TECHNOLOGY) 09 April 2014 (2014-04-09) description, paragraphs [0018]-[0043] | 1-15 |
| Y | CHENG, Mingming et al. "Global Contrast based Salient Region Detection" *IEEE CVPR 2011*, 31 December 2011 (2011-12-31), pages 409-416 | 1-15 |
| Y | CN 105869173 A (TIANJIN UNIVERSITY) 17 August 2016 (2016-08-17) description, paragraphs [0006]-[0107] | 8-13 |
| A | CN 104091326 A (XIAOMI TECHNOLOGY CO., LTD.) 08 October 2014 (2014-10-08) entire document | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 July 2019** | **31 July 2019** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/079510**

| Patent document cited in search report | | | Publication date (day/month/year) | Patent family member(s) | | | Publication date (day/month/year) |
|---|---|---|---|---|---|---|---|
| CN | 109461130 | A | 12 March 2019 | None | | | |
| CN | 103714537 | A | 09 April 2014 | CN | 103714537 | B | 11 January 2017 |
| CN | 105869173 | A | 17 August 2016 | CN | 105869173 | B | 31 August 2018 |
| CN | 104091326 | A | 08 October 2014 | None | | | |

Form PCT/ISA/210 (patent family annex) (January 2015)